(19) **Europäisches Patentamt**
**European Patent Office**
**Office européen des brevets**

(11) **EP 1 028 412 B1**

(12) **EUROPEAN PATENT SPECIFICATION**

(45) Date of publication and mention
of the grant of the patent:
**09.05.2007 Bulletin 2007/19**

(51) Int Cl.:
*G11B 7/00* *(2006.01)*   *G11B 7/13* *(2006.01)*

(21) Application number: **99310505.5**

(22) Date of filing: **23.12.1999**

(54) **Optical pickup apparatus for reducing cross talk between adjacent tracks**

Optisches Abtastgerät zur Verminderung des Übersprechsignals zwischen benachbarten Spuren

Appareil de lecture optique pour réduire la diaphonie entre les pistes adjacentes

(84) Designated Contracting States:
**DE FR GB NL**

(30) Priority: **12.02.1999 KR 9904982**

(43) Date of publication of application:
**16.08.2000 Bulletin 2000/33**

(73) Proprietor: **SAMSUNG ELECTRONICS CO., LTD.**
**Suwon-City, Kyungki-do (KR)**

(72) Inventors:
• **Chung, Chong-sam**
**Seongnam-city,**
**Kyungki-do (KR)**
• **Ahn, Young-man**
**Paldal-gu,**
**Suwon-city,**
**Kyungki-do (KR)**
• **Kim, Tae-kyung**
**Paldal-gu,**
**Suwon-city,**
**Kyungki-do (KR)**
• **Suh, Hea-jung**
**Seongnam-city,**
**Kyungki-do (KR)**
• **Jung, Seung-tae**
**Pundang-gu,**
**Seongnam-city,**
**Kyungki-do (KR)**
• **Lee, Chul-woo**
**Pundang-gu,**
**Seongnam-city,**
**Kyungki-do (KR)**
• **Park, In-sik**
**Kwonsun-gu,**
**Suwon-city,**
**Kyungki-do (KR)**
• **Shin, Dong-ho**
**Pundang-gu,**
**Seongnam-city,**
**Kyungki-do (KR)**

(74) Representative: **Clark, David James et al**
**Appleyard Lees**
**15 Clare Road**
**Halifax**
**HX1 2HY (GB)**

(56) References cited:
**US-A- 5 347 504    US-A- 5 740 141**

• **PATENT ABSTRACTS OF JAPAN vol. 1998, no. 12, 31 October 1998 (1998-10-31) & JP 10 198964 A (SONY CORP), 31 July 1998 (1998-07-31)**
• **PATENT ABSTRACTS OF JAPAN vol. 012, no. 334 (P-756), 8 September 1988 (1988-09-08) & JP 63 096744 A (TEAC CO), 27 April 1988 (1988-04-27)**
• **PATENT ABSTRACTS OF JAPAN vol. 012, no. 114 (P-688), 12 April 1988 (1988-04-12) & JP 62 243138 A (HITACHI LTD), 23 October 1987 (1987-10-23)**
• **PATENT ABSTRACTS OF JAPAN vol. 018, no. 379 (P-1771), 15 July 1994 (1994-07-15) & JP 06 103580 A (MATSUSHITA ELECTRIC IND CO LTD), 15 April 1994 (1994-04-15)**
• **PATENT ABSTRACTS OF JAPAN vol. 017, no. 329 (P-1561), 22 June 1993 (1993-06-22) & JP 05 036083 A (SHARP CORP), 12 February 1993 (1993-02-12)**

**Description**

The present invention relates to an optical pickup apparatus, and more particularly, to an optical pickup apparatus capable of reducing cross talk between adjacent tracks occurring when a high capacity recording medium having a narrow track pitch is recorded or reproduced.

In order to increase the capacity of a recording medium, development is centered on using a light source of a shorter wavelength and an objective lens having a larger numerical aperture when recording/reproducing the recording medium. That is, as an optical recording medium, a compact disk (CD) which uses an infrared light source of a wavelength of 780 nm and an objective lens having a numerical aperture of 0.45 is replaced by a digital versatile disk (DVD) which uses a light source of a wavelength of 650 nm and an objective lens having a numerical aperture of 0.6. In addition, to change specifications from the CD to the DVD and enhance the density of recording, development is centered to reduce the track pitch of a recording medium.

However, in the case of a recording medium having a narrow track pitch, cross talk between adjacent tracks may deteriorate the reproduction of a recorded signal.

Here, when a recording medium is recorded/reproduced by an optical pick-up apparatus, the degree of deterioration of the signal by adjacent tracks is defined by cross talk between the tracks, and an allowable value is set according to a recording medium. For example, in order to acquire a high quality reproduced signal in the case of a DVD-ROM, the DVD is required to have a cross talk value less than -30 dB.

A DVD-ROM uses an objective lens of a numerical aperture of 0.6 and a light source of a wavelength ($\lambda$) of 650 nm, is manufactured to have a track pitch of 0.74 $\mu$m, and has a capacity of 4.7 GB. Since the size of a beam spot determining a recording capacity is proportional to $\lambda$/NA, in the above case, $\lambda$/NA is 1.08. Therefore, the ratio of the track pitch (Tp) to the beam spot is Tp x NA/$\lambda$ = 0.68, and the cross talk between adjacent tracks has a value lower than -30dB.

Since an HD-DVD which is expected to attract public attention as a high density recording medium in the near future requires a capacity greater than 15 GB, the ratio of the track pitch to the beam spot must be lower than 0.6, and in this case the cross talk caused by adjacent tracks increases. For example, when a HD-DVD uses a light source of a wavelength of 410 nm and an objective lens of a numerical aperture of 0.6, and the track pitch is set to 0.368 $\mu$m so as to have a capacity of 15 GB, cross talk caused by adjacent tracks has a very high value higher than -20 dB. Therefore, in order to prevent deterioration of a reproduced signal, an optical pickup apparatus which is adapted to reduce cross talk caused by adjacent tracks is required.

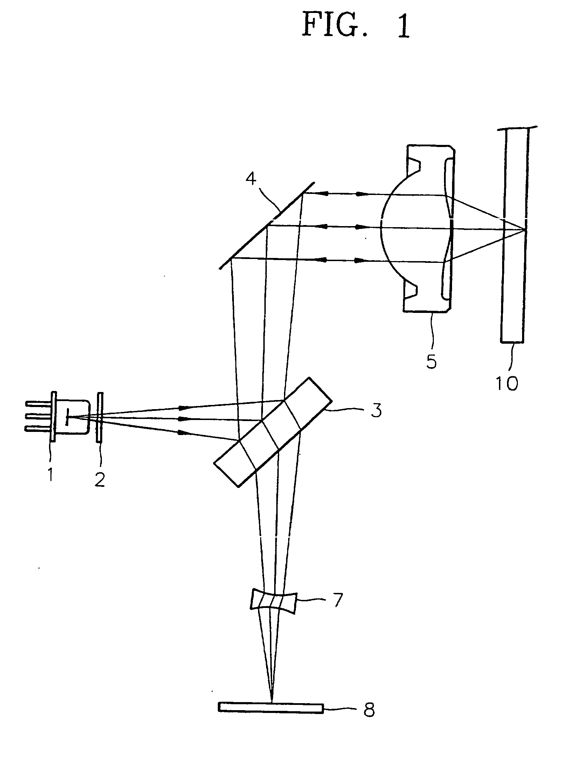

Figure 1 shows a conventional optical pickup apparatus capable of reducing cross talk between adjacent tracks.

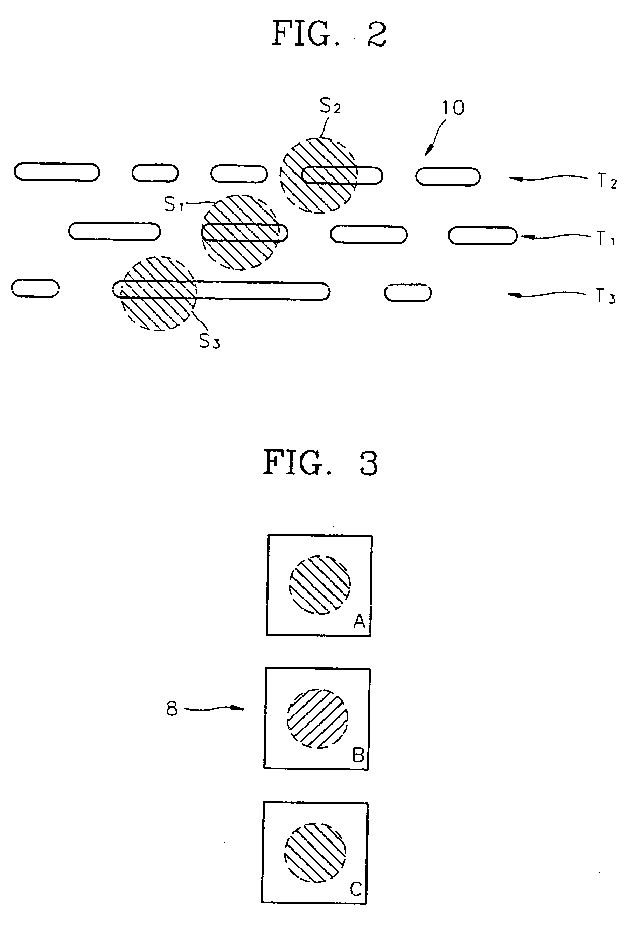

Referring to Figure 1, light emitted from a light source 1 is diffracted by a grating 2, and is separated into three light beams of a zero order diffracted light beam and $\pm$ first order diffracted light beams. After the beams are reflected on a beam splitter 3, the reflected beams are converged by an objective lens 5 and form three light beam spots S1, S2 and S3 at positions different from each other on an optical disk 10 as shown in Figure 2. That is, the zero order diffracted light beam forms the light beam spot S1 on a main track T1 from which an information signal is reproduced, and the $\pm$ first order diffracted light beams form the light beam spots S2 and S3 on first and second adjacent tracks T2 and T3 adjacent to the main track T1, respectively.

At this time, as shown in Figure 2, the light beam spots formed on the optical disk 10 are formed on the main track T1 and the adjacent tracks T2 and T3 to be slanted with respect to each other. That is, the light beam spot S2 formed on the first adjacent track T2 precedes the light beam spot S1 formed on the main track T1, and the light beam spot S3 formed on the second adjacent track T3 goes behind the light beam spot S1. Here, since side portions of the individual light beam spot lie over adjacent tracks due to the narrow track pitch, the zero order diffracted light beam and the $\pm$ first order diffracted light beams form the light beam spots not only on the corresponding tracks but also on the adjacent tracks.

The light beams which were reflected from the optical disk 10 and passed through the objective lens 5 pass through the beam splitter 3 and are detected by a photodetector 8 which is provided with first, second and third light receiving portions A, B and C performing photoelectrical conversion independently of each other. That is, the three light beams reflected from the respective tracks of the optical disk 10 are received by the respective light receiving portions A, B and C of the photodetector 8 as shown in Figure 3.

Here, reference number 4 denotes a reflective mirror, and reference number 7 denotes a sensing lens which condenses incident light beams on the photodetector 8.

In the optical pickup apparatus structured as described above, an information signal to be detected is a signal which is reflected from the main track T1 and received by the second light receiving portion B. However, since portions of the light beam spot S1 by the zero order diffracted light beam are formed over the first and second adjacent tracks T2 and T3, the detected signal of the second light receiving portion B includes not only the signal of the main track T1 but also the signals of adjacent tracks, which are intermixed therewith. Therefore, the information signal of the main track T1 is detected by performing a differential operation on the detected signal of the second light receiving portion B and the signals of adjacent tracks detected by the first and third light receiving portions A and C. When the light receiving portion and the signal detected by the light receiving portion are expressed by the same symbol, the RF signal of the main track T1 is expressed by the following Equation (1)

$$RF \text{ signal} = B - K \times [A + C] \qquad (1)$$

where K is a constant which is determined so that vibrations in the time axis of the information signal of the main track T1 can be minimized, i.e., a constant which is determined so that cross talk by the adjacent tracks T2 and T3 can be minimized.

On the other hand, since the three beams diverged by the grating 2 are converged on respective tracks to form the light beam spots which are slanted with respect to each other as shown in Figure 2, the signals of the adjacent tracks which are detected by the first and third light receiving portions A and C are delayed for a constant time with respect to the signals of the adjacent tracks which are included in the signal detected by the second light receiving portion B. Therefore, it is not possible to perform a real-time operation so as to detect the information signal of the main track, and there is a problem in that signals which are delayed for the constant time with respect to the detected signal B are used as the signals A and C of the adjacent tracks.

In addition, in the above method of reducing cross talk by adjacent tracks, since three light beam spots must be formed on respective tracks of the optical disk 10, the optical efficiency of the light beam spot S1 for recording/reproducing the information signal of the main track T1 is lowered, and it is difficult to use the light beam spot S1 for recording.

The Japanese patent abstract JP10198964 reflecting the preamble of the independent claim discloses a disk reproducing device which aims to prevent the effect of crosstalk growing even if track pitch is narrowed, to thereby achieve high density recording. The disk reproducing device includes one or more detectors provided for receiving reflected light from a disk. The detectors are divided into a plurality of light receiving areas in a direction corresponding to the radius direction of the disk. The output of the central light receiving area is given a larger gain than the output of the light receiving areas positioned off centre in the disk radius direction.

US 5,347,504 describes an optical disk apparatus which includes a photodetector divided into eight segments which receives a laser beam reflected from the optical disk and produce signals based on the laser beam sport thereon. The eight segments are combined in several patterns for the recorded information reproduction, the tracking error detection, and the focus error detection respectively. For the recorded information reproduction, eight segments are used as combined in three segment cells RC1, RC2 and RC3 which extend in a direction parallel to each other such that the segment cell RC1 is in centre and is sandwiched by other segment cell RC2 and RC3. The segment cells RC1, RC2 and RC3 are located perpendicular to the recording track of the optical disk and produce three signals C, R and L indicative of the laser beam intensity of the laser beam spot thereon, respectively. Thus obtained signals C is multiplied by a constant K and then added to the other signals R and L. By selecting suitable value as the constant K, the crosstalk component in the reproduced signal can be reduced.

The Japanese patent abstract JP63096744 describes a photodetector which aims to reduce crosstalk from adjacent tracks by arranging first and second light receiving parts at the sides of a main light receiving part. The output of the light receiving parts are processed by adding and attenuation, then subtracted from the output of the main light receiving part.

The Japanese patent abstract JP05036083 describes an optical recording and reproducing device which aims to obtain a regenerative signal whose crosstalk is suppressed, even for optical disks whose track pitch is reduced. Reflected light from the information track of an optical disk is captured by a main photodetector of a photodetector and the reflected light from each information track adjacent to the pertinent information track is captured by each photodetector. Each photodetector outputs a signal corresponding to a received light quantity, and the output of the main photodetector is waveform-equalized by a transversal filter in a signal processing part so as not to be correlated with the output signal of each of the other sub-photodetectors. The output of the transversal filter is added to the output of each sub-photodetector and by an adder, and the output of the adder is turned to the satisfactory regenerate signal whose crosstalk is suppressed.

US 5,740,141 describes a signal processing device used for an apparatus capable of optically reproducing information from a recording medium is disclosed. In the signal processing device, a signal including information recorded at positions adjacent to a prescribed position is multiplied by k. The multiplied signal is subtracted from a signal mainly including information recorded at the prescribed position. In the signal processing device, the coefficient k is adjusted as follows. In one case, the coefficient k is varied depending on the signal strength. In another case, the processed signals are held at appropriate timings and a signal used as an index is obtained from two more such signals. The coefficient k is optimized based on the index. In yet another case, the coefficient k is periodically varied in a synchronous manner with the fundamental period of the information recorded on the recording medium.

It is an aim of at least preferred embodiments of the present invention to provide an optical pickup apparatus capable of detecting, in real-time, an information signal of a main track in which cross talk between adjacent tracks is reduced, and capable of reducing cross talk by adjacent tracks without lowering the optical efficiency of a light beam spot.

According to the present invention there is provided an optical pickup apparatus as set forth in claim 1 appended hereto. Preferred features of the present invention will be apparent from the dependent claims and the description which follows.

For a better understanding of the invention, and to show how embodiments of the same may be carried into effect, reference will now be made, by way of example to the accompanying diagrammatic drawings in which:

Figure 1 is a diagram illustrating an optical layout of a conventional optical pickup apparatus capable of reducing cross talk between adjacent tracks;

Figure 2 is a plan view illustrating a portion of tracks of a conventional optical disk;

Figure 3 is a plan view schematically illustrating the photodetector shown in Figure 1;

Figure 4 is a diagram illustrating an optical layout of an optical pickup apparatus capable of reducing cross talk between adjacent tracks;

Figure 5 is a block diagram schematically illustrating the structures of the photodetector and operation unit shown in Figure 4;

Figure 6 is a plan view schematically illustrating an example of pits of recording medium for describing a principle of reducing cross talk by adjacent tracks in an optical pickup apparatus;

Figure 7 is a graph schematically illustrating a detected signal when reproducing a main track of the recording medium shown in Figure 6 by an optical pickup apparatus;

Figures 8A and 8B are graphs illustrating the amounts of cross talk with respect to operation constant K values when a recording medium having a track pitch of 0.368 $\mu$m and the pits shown Figure 6 is reproduced by an optical pickup apparatus under a condition in which the wavelength of a light source is 410 nm, and the numeral aperture of an objective lens is 0.6;

Figure 9 is a diagram illustrating an optical layout of an optical pickup apparatus capable of reducing cross talk by adjacent tracks according to an embodiment of the present invention;

Figure 10 is a plan view schematically illustrating an embodiment of the optical diffraction element shown in Figure 9; and

Figure 11 is a block diagram schematically illustrating first, second and third photodetectors and an operation unit shown in Figure 9.

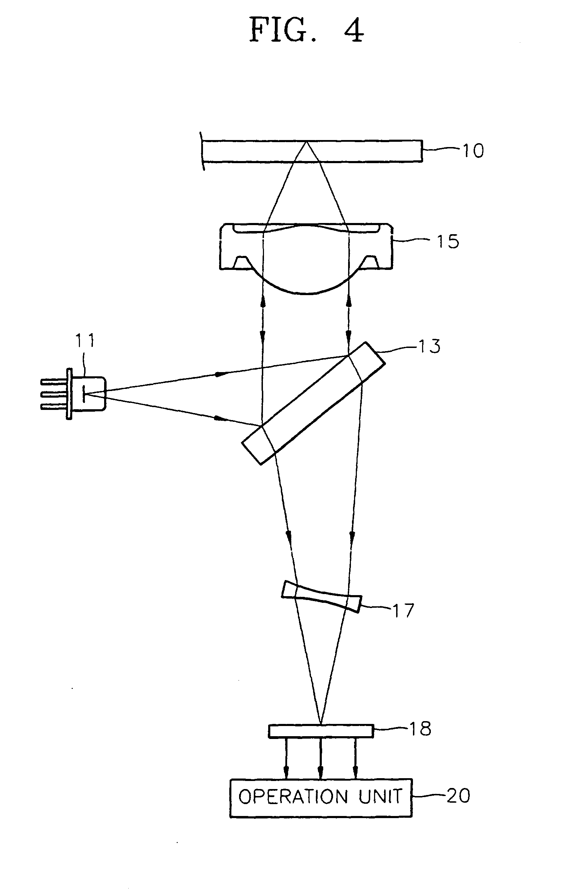

Figure 4 is a diagram illustrating an optical layout of an optical pickup apparatus capable of reducing cross talk caused by adjacent tracks. Referring to Figure 4, the preferred optical pickup apparatus comprises a light source 11 for emitting light, a light path changing means disposed on the optical path between the light source 11 and a recording medium 10 for changing a path of an incident light, an objective lens 15 disposed on the optical path between the light path changing means and the recording medium 10 for converging an incident light onto the recording medium 10, a photodetecting means for dividing the incident light beam and receiving the incident light in the divided form, and an operation unit 20 for operating the detected signal from the photodetecting means and outputting an information signal reduced in cross talk between adjacent tracks. Here, reference numeral 17 indicates a sensing lens.

A beam splitter 13 may be provided as the light path changing means. The beam splitter 13 changes traveling paths of incident light beams so that the beam splitter 13 can, for example, reflect most of the light beam and direct the reflected beam to the recording medium 10, and permit most of the incident beam reflected from the recording medium 10 to pass therethrough. Here, it is possible that a hologram element (not shown) may be provided as the light path changing means. The hologram element directly passes the incident light from the light source 11, and diffracts the incident light from the recording medium 10 toward the photodetecting means at a predetermined angle. In this case, the light source 11, the hologram element and the photodetecting means can be modularized.

The photodetecting means divides the incident light beam which is reflected from the recording medium and then passes through the light path changing means into a center portion and side portions with respect to the radial direction of the recording medium 10 and receives the incident light in the divided form.

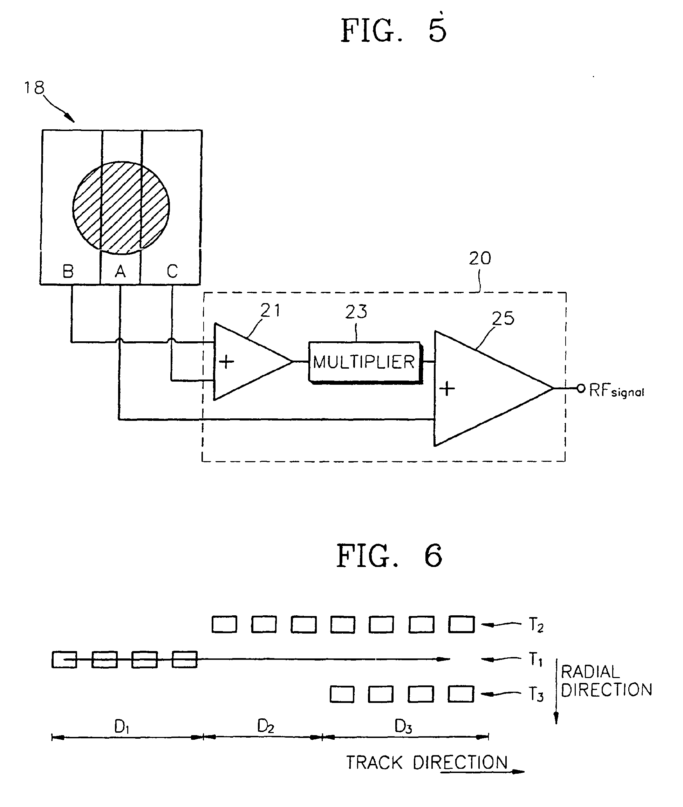

The photodetecting means is provided with a photodetector 18 which is configured to separately receive the center portion and side portions of the incident beam as shown in Figure 5. The photodetector 18 comprises a main light receiving portion A which receives the center portion of the incident light beam, and auxiliary light receiving portions B and C which are disposed at respective sides of the main light receiving portion A with respect to the radial direction of the recording medium 10 and receive the side portions of the incident light beam independently of the main light receiving portion A. Here, it is possible that one auxiliary light receiving portion B or C may be disposed at one side of the main light receiving portion A and receive one side portion of the incident light beam.

At this time, the main light receiving portion A has a predetermined size so as to receive the center portion within the range of about 10 to 90% of the incident light beam. Here, the optimum size of the main light receiving portion A which can, as will be described below, minimize the amount of cross talk by adjacent tracks can be decided with relation to the overall layout of an optical pickup apparatus according to the present invention and a value of operation constant K to be described below, and the possible range of the size is as mentioned above.

The operation unit 20 operates a detected signal A of the center portion of the incident light beam and detected signals B and C of the side portions of the incident light beam and removes cross talk by adjacent tracks included in the signal of the main track of the recording medium 10. The operation unit 20 comprises a first adder 21 which adds signals photoelectrically converted at and output from the first and second auxiliary light receiving portions B and C, a multiplier 23 which multiplies signals (B +C) output from the first adder 21 by the operation constant K, and a second adder 25 which adds the signal A photoelectrically converted at and output from the main light receiving portion A and the signal output from the multiplier, i.e., K(B + C).

Here, the operation constant K is a constant which is decided so that cross talk by adjacent tracks included in an information signal detected through the second adder 25, i.e., vibrations in the time axis of the information signal can be minimized. It is preferable that the operation constant K has a value more than about 1. Such an operation constant K value is an effective value which allows cross talk by adjacent tracks to be minimum in an optical pickup apparatus. The operation constant K value minimizes cross talk by adjacent tracks with respect to the main light receiving portion A having a size receiving the center portion within the range of about 10 to 90% of an incident light.

At this time, it is preferable that the multiplier 23 is designed to adjust the operation constant K. This is intended to set the optimum operation constant K value in response to situations at the time when an optical pickup apparatus is assembled and/or when the specifications of the recording medium 10 to be recorded/reproduced are changed, etc. At this time, the multiplier 23 may be provided to adjust the operation constant K in the range of more than about 1.

On the other hand, when the auxiliary light receiving portion (B or C) is provided at only one side of the main light receiving portion A, the operation unit according to the present invention is merely composed of the multiplier 23 and the second adder 25.

Now, the principle of reducing cross talk caused by adjacent tracks with the above described optical pickup apparatus will be described in detail with reference to an example in which pits of the recording medium 10 are as shown in Figure 6.

Referring to Figure 6, pits are formed along a main track T1 on a first interval D1 of the recording medium 10, another pits are formed along a first adjacent track T2 on a second interval, and still another pits are formed along the first adjacent track T2 and a second adjacent track T3. Here, when alternating components of the reproduced signal on the first and third intervals D1 and D3 are respectively X and Y, the cross talk by the adjacent tracks is defined as 20LOG (Y/X).

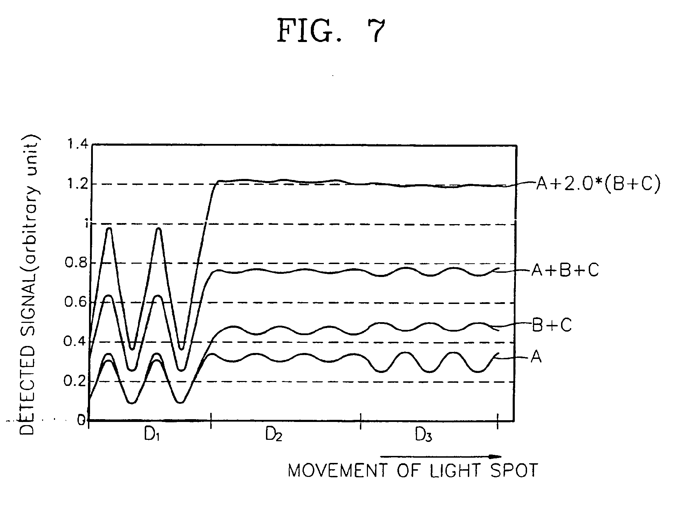

A light beam emitted from the light source 11 is converged by the objective lens 15 and forms a beam spot on the main track T1. At this time, the beam spot spreads over the first and second adjacent tracks T2 and T3 as well as the main track T1 due to a narrow track pitch. Therefore, the detected signal A of the main light receiving portion A and the detected sum signal B + C of the first and second auxiliary light receiving portions B and C are expressed as a graph shown in Figure 7. Here, the traverse axis indicates movement of the beam spot (the direction of an arrow in Figure 6) along the track direction. In addition, the longitudinal axis indicates detected signal values in an arbitrary unit.

Referring to Figure 7, though the detected signal A of the main light receiving portion A and the sum signal B + C of the detected signals of the auxiliary light receiving portions B and C are approximately in phase with each other on the first interval, they are about 180° out of phase with each other on the second and third intervals D2 and D3. Accordingly, the reproduced signal A + B + C which is the sum of the detected signals as they are, exhibits alternating components on the interval where pits are not formed on the main track T1, for example, the third interval D3 due to the interference of adjacent tracks T2 and T3. Therefore, cross talk by adjacent tracks becomes a high value higher than about -20 dB.

However, if the sum signal B + C of the detected signals of the auxiliary light receiving portions B and C is multiplied by the operation constant K = 2.0, the compensated reproduced signal which is the sum of the above signal and the detected signal of the main light receiving portion A, i.e., A + 2.0(B + C) is a signal in which alternating components are removed on the third interval D3 where pits are not formed on the main track T1 as shown in Figure 7.

Therefore, when information signal is detected by adding the detected signal of the main light receiving portion A which receives the center portion of the incident light beam and a signal produced by multiplying the detected signal of the auxiliary light receiving portions B and/or C which receive the side portions of the incident light beam by appropriate operation constant K, an excellent information signal (an RF (radio frequency) signal) in which cross talk by adjacent tracks are remarkably reduced can be reproduced even when the recording medium 10 has a relatively narrow track pitch.

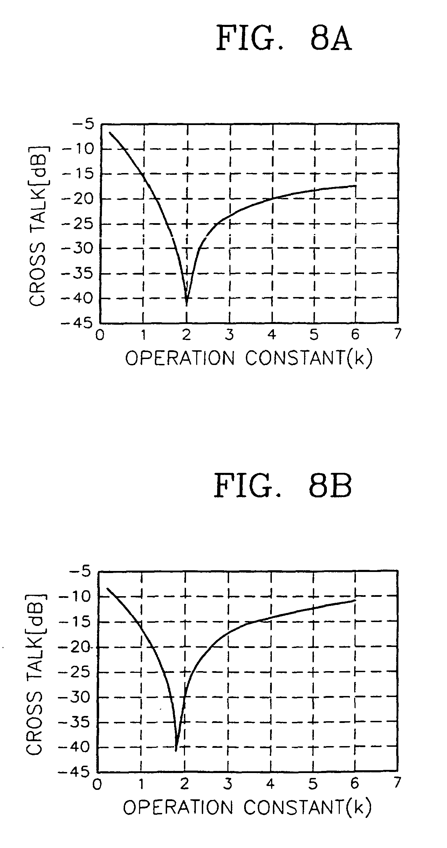

Figures 8A and 8B are graphs of the amounts of cross talk calculated according to operation constant K values respectively when the recording medium 10 having a track pitch of 0.368 $\mu$m and the track pattern shown in Figure6 is reproduced by a preferred optical pickup apparatus under the condition in which the wavelength of the light source 11 is 410 nm and the numerical aperture of the objective lens 15 is 0.6.

Figure 8A shows a graph of cross talk calculated according to operation constant K values when the main light receiving portion A is provided to receive 1/3 the center portion of the incident light, in which cross talk has the minimum value lower than -40 dB when the operation constant K = 2.0.

Figure 8B shows a graph of cross talk calculated according to operation constant K values when the main light receiving portion A is provided to receive % the center portion of the incident light, in which cross talk has the minimum value lower than -40 dB when the operation constant K = 1.8.

As described above, the optimum value of the operation constant K can be decided in connection with the overall layout of an optical pickup apparatus, which permits cross talk to have a minimum value lower than -30 dB with respect to the main light receiving portion A having a size for receiving a predetermined percentage of the center portion of the incident light beam, i.e., a predetermined percentage of within the range of about 10 to 90%.

Therefore, when the main light receiving portion A of the photodetector 18 is provided so as to receive the center portion of the incident light in the range of about 10 to 90%, and an appropriate operation constant is decided corresponding to the size of the main light receiving portion A, an information signal (an RF signal) can be detected in which cross talk by adjacent tracks is reduced.

Accordingly, if the preferred optical pickup apparatus is used, an excellent information signal having cross talk lower than -30 dB can be detected even when a HD-DVD in which the ratio of a track pitch to a beam spot is lower than 0.6 since a storage capacity higher than 15 GB is required.

In addition, since the preferred optical pickup apparatus forms only one beam spot, the intensity of the beam spot focused on the main track is stronger than a conventional optical pickup apparatus in which 3 beam spots are formed on the recording medium 10. Therefore, since the optical pickup apparatus can form a beam spot having a sufficient intensity on the main track, it can be used as a recording apparatus for recording an information signal on the recording medium 10.

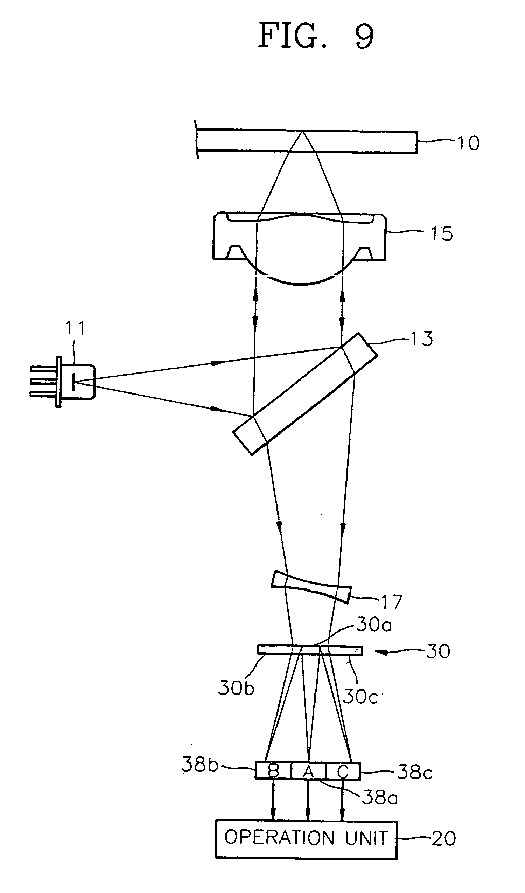

Figure 9 shows a diagram schematically illustrating an optical layout of an optical pickup apparatus capable of reducing cross talk between adjacent tracks according to another embodiment of the present invention, in which the same reference numerals as in Figure 4 indicate the same members. In this embodiment, a photodetecting means comprises an optical member 30 for directly passing the center portion of an incident light beam in a radial direction and for diffracting the side portions of the incident light beam at a predetermined angle, thereby separating the incident light beam into the center and side portions, and a plurality of photodetectors 38a, 38b and 38c for photoelectrically converting the separated light beams into electrical signals. Here, though the optical member 30 is shown to be disposed on the optical path between a sensing lens 17 and the photodetectors 38a, 38b and 38c, the optical member 30 can be disposed between a light path changing means and the sensing lens 17.

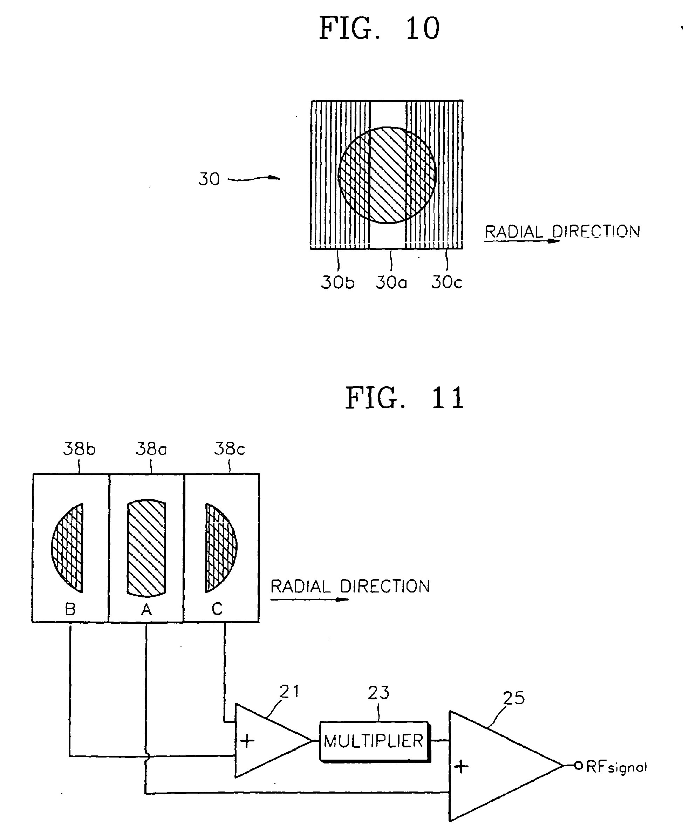

As shown in Figure 10, the optical member 30 is composed of a light passing portion 30a for directly passing the center portion of the incident light beam in a radial direction, and pattern portions 30b and 30c for diffracting the side portions of the incident light beam at a predetermined angle. The light passing portion 30a may be a transparent member or an open aperture (not shown). In the pattern portions 30b and 30c, patterns, for example, hologram patterns are formed so that the patterns can diffract the incident light beam to produce a - first order diffracted light beam and a + first order diffracted light beam.

At this time, the light passing portion 30a has a size designed to directly pass about 10 to 90% of the center portion of the incident light beam as the main light receiving portion A of the previous embodiment of the present invention.

As shown in Figure 11, the main photodetector 38a receives the center portion of the light beam having passed the light passing portion 30a. The auxiliary photodetectors 38b and 38c are disposed at the sides of the main photodetector 38a in a radial direction of the recording medium 10, and receive the side portions of the light beam having been diffracted at and passed the pattern portions 30b and 30c, respectively.

Here, one of the pattern portions 30b and 30c may comprise a shielding member (not shown). In this case, the auxiliary photodetector 38b or 38c is disposed corresponding to the pattern portions.

Since the principle and operation of reproducing an information signal in which cross talk by adjacent tracks is reduced by the above described optical pickup apparatus are the same as the previous embodiment of the present invention, the description will be omitted.

The above-described optical pickup apparatus according to the present invention illuminates one beam spot on the track of a recording medium, detects the center and side portions, with respect to a radial direction of the recording medium, of the light beam reflected from the recording medium, separately, multiplies the detected signal of the side portions by an operation constant, and adds the result and the detected signal of the center portion, thereby reproducing a main track information signal reduced in cross talk by adjacent tracks in real time.

Therefore, even when information is reproduced from a high capacity recording medium having a narrow track pitch, in particular, a HD-DVD in which the ratio of a beam spot to a track pitch is decided to be a value less than 0.6, an excellent reproduced signal can be obtained in real time in which cross talk by adjacent tracks is reduced. In addition, since the optical efficiency of a beam spot focused on the main track is not lowered, recording of an information signal is possible.

**Claims**

1. An optical pickup apparatus for reducing cross talk between adjacent tracks of a recording medium, the apparatus including a light source (11) for emitting a light beam, a light path changing means (13) disposed on the optical path between the light source and a recording medium (10) for changing the path of an incident light beam, an objective lens (15) disposed on the optical path between the light path changing means (13) and the recording medium (10) for converging an incident light onto the recording medium (10), and a photodetecting means (38) for receiving a reflected light beam which is a reflection of the incident light beam from the recording medium and passed through the light path changing means, wherein the photodetecting means (38) for dividing the reflected light beam into a center portion and at least one side portion with respect to the radial direction of the recording medium and receiving the reflected light in the divided form; and an operation unit (20) for operating the detected signals of the center portion and the at least one side portion of the reflected light beam from the photodetecting means and outputting an information signal of a main track; **characterized in that** the photodetecting means comprises:

   an optical member (30) for directly passing the center portion of the reflected light beam and for diffracting at least one side portion of the reflected light beam at a predetermined angle, thereby separating the reflected light beam into the center and at least one side portion in a radial direction; and
   a plurality of photodetectors (38a,38b) for photoelectrically converting the separated light beams into electrical signals independently of each other.

2. The optical pickup apparatus as claimed in claim 1, wherein the photodetecting means (38) is a photodetector comprising a main light receiving portion (A) which receives the center portion of the reflected light beam, and at least one auxiliary light receiving portion (B/C) which is disposed at a side of the main light receiving portion (A) with respect to the radial direction of the recording medium (10) to receive the at least one side portion of the reflected light beam apart from the main light receiving portion.

3. The optical pickup apparatus as claimed in claim 2, wherein the photodetecting means is a photodetector comprising two auxiliary light receiving portions (B,C) disposed either side of the main light receiving portion (A) with respect to the radial direction of the recording medium (10) to receive respective side portions of the reflected light beam independently of the main light receiving portion (A).

4. The optical pickup apparatus as claimed in claim 2 or 3, wherein the main light receiving portion (A) has a predetermined size so as to receive the center portion within a range of about 10 to 90% of the reflected light beam.

5. The optical pickup apparatus as claimed in any preceding claim, wherein the optical member (30) comprises a central light passing portion (38) and hologram pattern portions (30b,30c) arranged to produce +/- first order diffracted light beams either side of the central light passing portion (30a) respectively.

6. The optical pickup apparatus as claimed in any of claims 1 to 5, wherein the operation unit (20) includes: a multiplier (23) for multiplying the detected signals of the at least one side portion of the reflected light beam by an adjusting operation constant K so that cross talk by adjacent tracks can be minimized; and an adder (25) for adding the signal output from the multiplier and the detected signal of the main light receiving portion of the reflected light beam, to produce an information signal in which cross talk is reduced.

7. The optical pickup apparatus as claimed in claim 6, wherein the operation unit (20) comprises a second adder (21) for adding the detected signals of each side portion and supplying the result to the multiplier (23).

8.  The optical pickup apparatus as claimed in claim 6 or 7, wherein the operation constant K has a value which is approximately 1 or higher.

9.  The optical pickup apparatus as claimed in any of claims 6 to 8, wherein the operation constant K is selected to be approximately 1.8 or approximately 2.0.


**Patentansprüche**

1.  Optische Abnehmervorrichtung zum Reduzieren von Nebensprechen zwischen benachbarten Spuren eines Aufzeichnungsmediums, wobei die Vorrichtung eine Lichtquelle (11) zum Emittieren eines Lichtstrahls, eine Lichtweg-Änderungseinrichtung (13), die auf dem optischen Weg zwischen der Lichtquelle und einem Aufzeichnungsmedium (10) angeordnet ist, um den Weg eines auftreffenden Lichtstrahls zu ändern, eine Objektivlinse (15), die auf dem optischen Weg zwischen der Lichtweg-Änderungseinrichtung (13) und dem Aufzeichnungsmedium (10) angeordnet ist, um ein auftreffendes Licht auf das Aufzeichnungsmedium (10) zu bündeln, und eine Fotodetektoreinrichtung (38) zum Empfangen eines reflektierten Lichtstrahls enthält, der eine Reflektion des auftreffenden Lichtstrahls von dem Aufzeichnungsmedium ist und durch die Lichtweg-Änderungseinrichtung hindurchgetreten ist, wobei die Fotodetektoreinrichtung (38) dazu dient, den reflektierten Lichtstrahl in einen Mittelteil und wenigstens einen Seitenteil in Bezug auf die radiale Richtung des Aufzeichnungsmediums zu teilen und den reflektierten Lichtstrahl in der geteilten Form zu empfangen, und eine Verarbeitungseinheit (20) zum Verarbeiten der erfassten Signale des Mittelteils und des wenigstens einen Seitenteils des reflektierten Lichtstrahls von der Fotodetektoreinrichtung sowie zum Ausgeben eines Informationssignals einer Hauptspur, **dadurch gekennzeichnet, dass** die Fotodetektoreinrichtung umfasst,

    ein optisches Element (30) zum direkten Durchlassen des Mittelteils des reflektierten Lichtstrahls und zum Beugen wenigstens eines Seitenteils des reflektierten Lichtstrahls in einem vorgegebenen Winkel, um so den reflektierten Lichtstrahl in den Mittelteil und wenigstens einen Seitenteil in einer radialen Richtung zu trennen; und eine Vielzahl von Fotodetektoren (38a, 38b), die die getrennten Lichtstrahlen unabhängig voneinander fotoelektrisch umwandeln.

2.  Optische Abnehmervorrichtung nach Anspruch 1, wobei die Fotodetektoreinrichtung (38) ein Fotodetektor ist, der einen Haupt-Lichtempfangsabschnitt (A), der den Mittelteil des reflektierten Lichtstrahls empfängt, und wenigstens einen Neben-Lichtempfangsabschnitt (B/C) umfasst, der an einer Seite des Haupt-Lichtempfangsabschnitts (A) in Bezug auf die radiale Richtung des Aufzeichnungsmediums (10) angeordnet ist, um den wenigstens einen Seitenteil des reflektierten Lichtstrahls entfernt von dem Haupt-Lichtempfangsabschnitt zu empfangen.

3.  Optische Abnehmervorrichtung nach Anspruch 2, wobei die Fotodetektoreinrichtung ein Fotodetektor ist, der zwei Neben-Lichtempfangsabschnitte (B,C) umfasst, die auf beiden Seiten des Haupt-Lichtempfangsabschnitts (A) in Bezug auf die radiale Richtung des Aufzeichnungsmediums (10) angeordnet sind, um jeweilige Seitenteile des reflektierten Lichtstrahls unabhängig von dem Haupt-Lichtempfangsabschnitt (A) zu empfangen.

4.  Optische Abnehmervorrichtung nach Anspruch 2 oder 3, wobei der Haupt-Lichtempfangsabschnitt (A) eine vorgegebene Größe hat, so dass er den Mittelteil in einem Bereich von ungefähr 10 bis 90% des reflektierten Lichtstrahls empfängt.

5.  Optische Abnehmervorrichtung nach einem der vorangehenden Ansprüche, wobei das optische Element (30) einen mittleren Lichtdurchlassabschnitt (38) und Hologram-Musterabschnitte (30b, 30c) umfasst, die so angeordnet sind, dass sie gebeugte +/- - Lichtstrahlen erster Ordnung jeweils auf beiden Seiten des mittleren Lichtdurchlassabschnitts (30a) erzeugen.

6.  Optische Abnehmervorrichtung nach einem der Ansprüche 1 bis 5, wobei die Verarbeitungseinheit (20) enthält:

    einen Vervielfacher (23), der die erfassten Signale des wenigstens einen Seitenabschnitts des reflektierten Lichtstrahls vervielfacht, indem er eine Verarbeitungskonstante K so reguliert, dass Nebensprechen durch benachbarte Spuren minimiert werden kann, sowie einen Addierer (25), der das von dem Vervielfacher ausgegebene Signal und das erfasste Signal des Haupt-Lichtempfangsabschnitts des reflektierten Lichtstrahls addiert, um ein Informationssignal zu erzeugen, in dem Nebensprechen reduziert ist.

**7.** Optische Abnehmervorrichtung nach Anspruch 6, wobei die Verarbeitungseinheit (20) einen zweiten Addierer (21) umfasst, der die erfassten Signale jedes Seitenteils addiert und das Ergebnis dem Vervielfacher (23) zuführt.

**8.** Optische Abnehmervorrichtung nach Anspruch 6 oder 7, wobei die Verarbeitungskonstante K einen Wert hat, der ungefähr 1 oder mehr beträgt.

**9.** Optische Abnehmervorrichtung nach einem der Ansprüche 6 bis 8, wobei die Verarbeitungskonstante K so ausgewählt wird, dass sie ungefähr 1, 8 oder ungefähr 2,0 beträgt.

## Revendications

**1.** Dispositif de lecture optique pour réduire une diaphonie entre des pistes adjacentes d'un support d'enregistrement, le dispositif incluant une source de lumière (11) pour émettre un faisceau lumineux, des moyens de changement de trajet lumineux (13) disposés sur le trajet optique entre la source de lumière et un support d'enregistrement (10) pour changer le trajet d'un faisceau lumineux incident, un objectif (15) disposé sur le trajet optique entre les moyens de changement de trajet lumineux (13) et le support d'enregistrement (10) pour faire converger une lumière incidente sur le support d'enregistrement (10), et des moyens de photodétection (38) pour recevoir un faisceau lumineux réfléchi qui est une réflexion du faisceau lumineux incident depuis le support d'enregistrement et passé à travers les moyens de changement de trajet lumineux, les moyens de photodétection (38) divisant le faisceau lumineux réfléchi en une partie centrale et au moins une partie latérale par rapport à la direction radiale du support d'enregistrement et recevant la lumière réfléchie sous la forme divisée, et une unité opérationnelle (20) pour exploiter les signaux détectés de la partie centrale et de la au moins une partie latérale du faisceau lumineux réfléchi par les moyens de photodétection et délivrer en sortie un signal informationnel d'une piste principale, **caractérisé en ce que** les moyens de photodétection comportent :

un élément optique (30) pour faire passer directement la partie centrale du faisceau lumineux réfléchi et pour diffracter au moins une partie latérale du faisceau lumineux réfléchi selon un angle prédéterminé, de manière à séparer le faisceau lumineux réfléchi en le centre et au moins une partie latérale dans une direction radiale, et une pluralité de photodétecteurs (38a, 38) pour convertir photoélectriquement les faisceaux lumineux séparés en signaux électriques indépendamment les uns des autres.

**2.** Dispositif de lecture optique selon la revendication 1, dans lequel les moyens de photodétection (38) sont un photodétecteur comportant une partie de réception de lumière principale (A) qui reçoit la partie centrale du faisceau lumineux réfléchie, et au moins une partie de réception de lumière auxiliaire (B/C) qui est disposée sur un côté de la partie de réception de lumière principale (A) par rapport à la direction radiale du support d'enregistrement (10) pour recevoir la au moins une partie latérale du faisceau lumineux réfléchi à l'écart de la partie de réception de lumière principale.

**3.** Dispositif de lecture optique selon la revendication 2, dans lequel les moyens de photodétection sont un photodétecteur comportant deux parties de réception de lumière auxiliaires (B, C) disposées sur chaque côté de la partie de réception de lumière principale (A) par rapport à la direction radiale du support d'enregistrement (10) pour recevoir des parties latérales respectives du faisceau lumineux réfléchi indépendamment de la partie de réception de lumière principale (A).

**4.** Dispositif de lecture optique selon la revendication 2 ou 3, dans lequel la partie de réception de lumière principale (A) a une taille prédéterminée de manière à recevoir la partie centrale dans une plage d'environ 10 à 90 % du faisceau lumineux réfléchi.

**5.** Dispositif de lecture optique selon l'une quelconque des revendications précédentes, dans lequel l'élément optique (30) comporte une partie de passage de lumière centrale (38) et des parties de motif holographique (30b, 30c) conçues pour produire des faisceaux lumineux diffractés du +/- premier ordre sur chaque côté de la partie de passage de lumière centrale (30a), respectivement.

**6.** Dispositif de lecture optique selon l'une quelconque des revendications 1 à 5, dans lequel l'unité opérationnelle (20) inclut : un multiplicateur (23) pour multiplier les signaux détectés de la au moins une partie latérale du faisceau lumineux réfléchi en ajustant une constante d'opération K de sorte qu'une diaphonie par des pistes adjacentes peut être minimisée, et un additionneur (25) pour additionner le signal délivré en sortie par le multiplicateur et le signal détecté de la partie de réception de lumière principale du faisceau lumineux réfléchi, afin de produire un signal informationnel dans lequel une diaphonie est réduite.

7.  Dispositif de lecture optique selon la revendication 6, dans lequel l'unité opérationnelle (20) comporte un second additionneur (21) pour additionner les signaux détectés de chaque partie latérale et délivrer le résultat dans le multiplicateur (23).

8.  Dispositif de lecture optique selon la revendication 6 ou 7, dans lequel la constante d'opération K a une valeur qui est approximativement égale à 1 ou plus.

9.  Dispositif de lecture optique selon l'une quelconque des revendications 6 à 8, dans lequel la constante d'opération K est choisie pour être approximativement égale à 1,8 ou approximativement égale à 2,0.

# FIG. 1

# FIG. 2

# FIG. 3

# FIG. 4

# FIG. 5

# FIG. 6

# FIG. 7

## FIG. 8A

## FIG. 8B

# FIG. 9

# FIG. 10

30 →

RADIAL DIRECTION

30b   30a   30c

# FIG. 11

38b   38a   38c

B   A   C

RADIAL DIRECTION

21   23   25

+   MULTIPLIER   +   RF signal